# FASCICULE DE BREVET EUROPEEN

(11) **EP 1 814 783 B1**
(45) Date de publication et mention de la délivrance du brevet: **21.05.2008**
(21) Numéro de dépôt: 05818247.8
(22) Date de dépôt: 17.11.2005
(51) Int. Cl.: B64D 27/26

(54) **SYSTEME DE FIXATION D'UN MAT DE MOTEUR A L'AILE D'UN AERONEF**
SYSTEM ZUM BEFESTIGEN EINES TRIEBWERKPYLONS AN EINER FLUGZEUGTRAGFLÄCHE
SYSTEM FOR FIXING AN ENGINE PYLON TO AN AIRCRAFT WING

(30) Priorité: 23.11.2004 FR 0412408
(43) Date de publication de la demande: 08.08.2007
(73) Titulaire: AIRBUS France, 31060 Toulouse Cédex (FR)
(72) Inventeur: CAZALS, Olivier, F-31700 Daux (FR)
(74) Mandataire: Bonnetat, Christian
(86) Numéro de dépôt international: PCT/FR2005/002851
(87) Numéro de publication internationale: WO 2006/056678

(56) Documents cités:
- US-A- 5 806 792
- US-A1- 2004 129 832
- DATABASE WPI Section PQ, Week 199727 Derwent Publications Ltd., London, GB; Class Q25, AN 1997-296588 XP002335277 & SU 1 099 538 A1 (PRYTKOV A S) 20 octobre 1996 (1996-10-20)

## Description

La présente invention concerne un ensemble constitué d'un mât de moteur d'aéronef et d'un système de fixation dudit mât à l'aile correspondante de la voilure dudit aéronef.

On sait que les moteurs d'ailes, comme les réacteurs, sont reliés aux ailes de l'avion par l'intermédiaire de mâts structuraux jouant le rôle d'interface de liaison entre la voilure et les moteurs. Aussi, un système de fixation approprié est prévu pour assurer la liaison du mât à l'aile, tandis qu'un autre système de fixation, étranger au système de l'invention, assure la liaison du moteur au mât.

Par exemple, sur les avions de transport ou autres, équipés de moteurs d'ailes, les mâts sont réalisés notamment à partir de longerons et de nervures assemblés pour former un caisson rigide ayant une configuration allongée à section transversale évolutive globalement rectangulaire.

Le système de fixation du mât à l'aile est généralement situé entre sensiblement la moitié arrière de la partie supérieure dudit mât et la partie correspondante de l'intrados de l'aile et il se compose d'une attache avant, d'une attache arrière et d'une attache intermédiaire dont la disposition et la conception sont déterminées et certifiées pour reprendre efficacement les efforts et les moments susceptibles d'être engendrés selon les trois axes de l'avion (roulis X, tangage Y et lacet Z).

En particulier, les attaches avant et arrière du système de fixation se composent de ferrures inférieures issues de la face supérieure du mât, de ferrures supérieures issues en correspondance de l'intrados de l'aile, et de bielles de liaison reliant lesdites ferrures correspondantes, par l'intermédiaire d'axes d'articulation orientés selon l'axe de tangage de l'aéronef pour l'attache avant et selon l'axe de roulis pour l'attache arrière. Quant à l'attache intermédiaire, elle peut comprendre un pion ou arbre issu de l'intrados de l'aile et s'engageant dans une rotule prévue dans la face supérieure du mât, l'ensemble pion-rotule étant sensiblement agencé selon l'axe de lacet de l'aéronef. Ainsi, le montage du mât par rapport à l'aile est figé par le système de fixation et exige un certain espace entre le mât et l'aile pour l'agencement desdites attaches.

Par ailleurs, on sait que les avionneurs cherchent à réduire les coûts de développement des nouveaux aéronefs. Aussi, l'une des voies explorées consiste à utiliser un même moteur pour équiper plusieurs avions différents, par exemple un moteur pouvant à la fois être monté sur un avion long-courrier tel qu'un quadriréacteur et sur un avion moyen-courrier tel qu'un biréacteur. Cependant, une telle réalisation est actuellement difficilement envisageable, voire impossible, ne serait-ce que par les problèmes dimensionnels soulevés. En effet, les moteurs équipant les avions gros-porteurs ont une dimension diamétrale importante (surtout au niveau de la soufflante) et en tout cas nettement supérieure à celle des moteurs de moindre puissance équipant les avions moyens-porteurs, de sorte que, si l'on montait des gros moteurs sur les mâts des avions moyens-courriers à la place des moteurs moins puissants, la partie inférieure de ces gros moteurs serait trop proche du sol, ce qui en interdirait l'installation.

La présente invention a pour but de remédier à ces inconvénients et concerne un ensemble, dont la conception permet d'augmenter la distance séparant le mât du sol et de pouvoir ainsi monter des moteurs aussi bien de grande puissance que de moyenne puissance sans modifier le mât structurel.

A cet effet, l'ensemble constitué d'un mât de moteur d'aéronef et d'un système de fixation dudit mât à l'aile correspondante de la voilure dudit aéronef, du type connu par US-A-5 806 792 et comportant une attache avant, une attache arrière et une attache intermédiaire permettant de relier ledit mât à ladite aile et agencées respectivement sensiblement selon des axes pouvant correspondre aux axes de tangage, de roulis et de lacet dudit aéronef, ladite attache arrière étant unique et comportant une ferrure inférieure solidaire dudit mât, une ferrure supérieure apte à être solidarisée avec ladite aile et au moins une bielle reliant, par l'intermédiaire d'axes d'articulation parallèles, lesdites ferrures inférieure et supérieure, est remarquable, selon l'invention, en ce que ladite ferrure inférieure de ladite attache arrière a une dimension sensiblement analogue à ladite face transversale arrière dudit mât et est agencée fixement sur ladite face transversale arrière, dans le prolongement dudit mât, ladite ferrure inférieure venant au plus sensiblement à fleur de la face supérieure dudit mât.

Ainsi, grâce à l'invention, comme la ferrure inférieure arrière ne fait plus saillie par rapport à la face supérieure du mât, on peut rapprocher au plus près cette dernière de l'intrados de l'aile, de sorte que l'on peut monter, sous le mât, un moteur dimensionnellement plus grand, puisque la distance séparant le mât du sol est augmentée. Par exemple, un avion équipé initialement de moteurs d'une puissance donnée pourrait recevoir, grâce au système de fixation des mâts à la voilure, des moteurs plus puissants malgré l'augmentation dimensionnelle de ces derniers. Les avantages en matière de coût d'exploitation apparaissent clairement. Par ailleurs, on obtient une liaison mât-aile beaucoup plus compacte, ce qui est mécaniquement et aérodynamiquement bénéfique.

De même, avec un mât au plus près de l'aile, on peut remotoriser certains avions équipés de moteurs d'ancienne génération, avec des moteurs plus modernes à grande soufflante.

On remarquera que ladite ferrure inférieure prolonge et recouvre totalement la face transversale arrière du mât pour faire partie intégrante de ce dernier.

Selon un mode préféré de réalisation, ladite ferrure inférieure de l'attache arrière est une pièce monobloc fixée à ladite face transversale arrière du mât et ayant une forme de chape destinée à recevoir ladite bielle par l'intermédiaire dudit axe d'articulation parallèle à l'axe de roulis dudit aéronef.

Dans une variante de réalisation, ladite ferrure inférieure peut se composer de deux pièces sensiblement identiques, disposées côte à côte et portant ledit axe d'articulation parallèle audit axe de roulis et autour duquel est montée ladite bielle.

En outre, ladite ferrure inférieure peut définir ladite face arrière du mât et faire ainsi partie intégrante de sa structure.

Quant à ladite ferrure supérieure de l'attache arrière, c'est également une pièce monobloc en forme de U dont la base est solidaire de l'intrados de ladite aile.

A des fins de sécurité, ladite attache arrière comporte deux bielles identiques et superposées l'une contre l'autre reliant lesdites ferrures inférieure et supérieure par l'intermédiaire desdits axes d'articulation.

Avantageusement, ladite bielle a une forme de plaque triangulaire au moins isocèle, dont la base est articulée à la ferrure inférieure autour de deux axes parallèles, tandis que le sommet opposé à ladite base est articulé à la ferrure supérieure autour d'un unique axe, parallèle aux deux autres.

En variante, la base de ladite bielle triangulaire pourrait être articulée à la ferrure supérieure autour de deux axes parallèles, tandis que le sommet opposé à la dite base est articulé à la ferrure inférieure autour d'un unique axe, parallèle aux deux autres. Cet agencement permet alors une diminution du caisson du mât en largeur, ce qui améliore les performances aérodynamiques de l'ensemble propulsif.

De préférence, chaque axe d'articulation de ladite attache arrière est double et comprend un axe externe creux à l'intérieur duquel est disposé concentriquement un axe interne, les deux axes de chaque articulation reliant la bielle à la ferrure correspondante.

Cependant, quand ladite ferrure inférieure se compose de deux pièces identiques, ledit axe d'articulation de la ferrure inférieure est constitué de deux demi-axes longitudinaux faisant saillie respectivement desdites pièces et qui, lorsque lesdites pièces sont disposées côte à côte, forment ledit axe d'articulation.

Par ailleurs, également à des fins de sécurité, de part et d'autre de ladite ferrure supérieure, sont prévues des équerres de renfort superposées à ladite ferrure.

A toutes fins utiles, on remarquera que les documents US-2004/0129832 A1 et SU-1 099 538 décrivent des systèmes de fixation de mâts d'aéronefs à une aile de voilure.

Les figures du dessin annexé feront bien comprendre comment l'invention peut être réalisée. Sur ces figures, des références identiques désignent des éléments semblables.

La figure 1 est une vue en plan longitudinal, schématique d'un mât de moteur d'aéronef, associé à son aile respective par un système de fixation, conformément à la présente invention.

La figure 2 montre en perspective schématique la structure générale dudit mât avec les ferrures associées dudit système de fixation.

La figure 3 est une vue latérale agrandie partiellement en coupe de l'attache arrière du système de fixation représenté sur la figure 1.

La figure 4 est une vue en perspective arrière de ladite attache arrière.

La figure 5 montre schématiquement le gain en hauteur obtenu par la conception de l'attache arrière selon l'invention comparativement à l'attache arrière connue.

Les figures 6 et 7 sont respectivement une vue latérale et une vue arrière d'une variante de réalisation de ladite attache arrière.

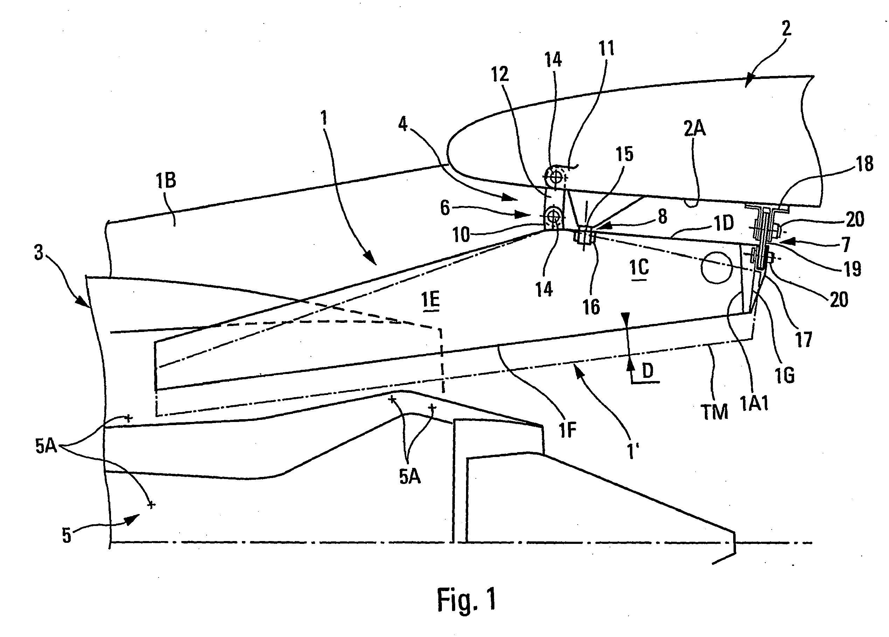

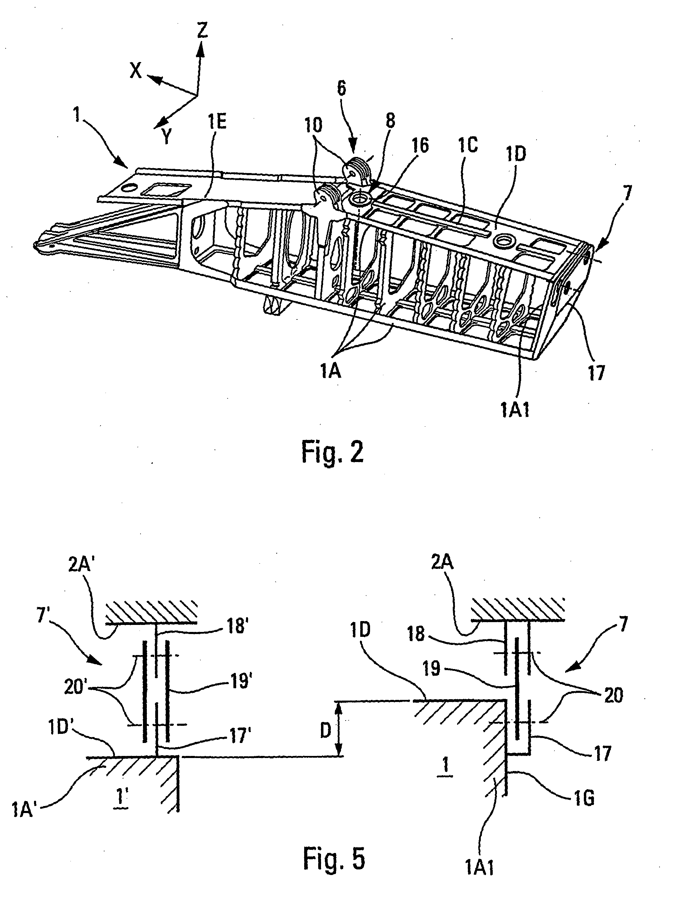

Le mât 1, représenté sur les figures 1 et 2, assure l'interface de liaison entre l'aile 2 d'un aéronef et le moteur 3. Il se compose structurellement de longerons, plaques, nervures, etc ... 1 A assemblées entre eux par tout moyen approprié utilisé usuellement dans ce domaine et formant un caisson allongé rigide de forme grossièrement parallélépipédique, sensiblement parallèle à l'axe longitudinal de roulis X (repère, figure 2) de l'aéronef. Bien entendu, des carénages 1 B enveloppent le mât 1 pour assurer une continuité aérodynamique entre l'aile 2 et le moteur 3.

Comme le montre la figure 1, approximativement la moitié arrière 1C du mât est située sous l'aile 2 et est accrochée par sa face supérieure arrière correspondante 1 D à l'intrados 2A de l'aile, par l'intermédiaire d'un système de fixation 4. Quant à la moitié avant 1 E du mât, elle porte le moteur 3 également par un système de fixation 5 mais différent de celui de l'invention et symbolisé par les points d'attache 5A, permettant la liaison entre la face inférieure avant 1 F du mât et les parties structurelles concernées du moteur 3.

Le système de fixation 4 du mât 1 à l'aile 2 comprend usuellement une attache avant 6, une unique attache arrière 7 et une attache intermédiaire 8.

Brièvement, l'attache avant 6 est située sensiblement au milieu de la face supérieure 1 D du mât et est en fait double puisqu'elle se compose de deux jeux alignés identiques de ferrures 10 issues du caisson et faisant saillie de sa face supérieure (figures 1 et 2) et de ferrures 11 issues de l'intrados de l'aile (figure 1), reliées entre elles par des bielles plates 12 superposées autour d'axes respectifs 14. Ces derniers s'étendent transversalement au caisson allongé du mât 1, c'est-à-dire sensiblement parallèlement à l'axe de tangage Y de l'aéronef. L'attache intermédiaire 8 est quant à elle située derrière l'attache avant 6 dans le plan longitudinal de symétrie médian du mât et elle se compose d'un pion ou arbre 15 faisant saillie du dessous de l'aile dont il est solidaire et qui s'engage dans une rotule 16 prévue en correspondance dans la face supérieure 1 D du mât. Cette attache pion-rotule est disposée approximativement verticalement selon l'axe de lacet Z de l'aéronef.

En ce qui concerne l'attache arrière 7, elle comprend une ferrure inférieure 17 fixée au mât, deux bielles plates superposées identiques 19 et une ferrure supérieure 18 fixée à l'intrados de l'aile. Des axes parallèles d'articulation 20 relient les extrémités des bielles 19 aux ferrures respectives 17, 18 et s'étendent sensiblement selon l'axe de roulis X de l'aéronef. Une telle disposition des attaches 6, 7 et 8 selon les axes X, Y et Z permet de reprendre les efforts et les moments apparaissant dans les trois dimensions et d'assurer une liaison mât-aile optimale.

Selon l'invention, la ferrure inférieure 17 de l'attache arrière 7 du mât 1 est située sur la face transversale arrière 1 G du mât, dans son prolongement, de sorte que la ferrure 17 ne dépasse pas de la face supérieure 1 D du mât, comme le montrent notamment les figures 1 et 2.

Dans cet exemple de réalisation représenté sur les figures 1 à 4, la ferrure inférieure 17 est une pièce structurelle monobloc à section transversale en U, analogue à une chape 21, dont l'un 22 des côtés latéraux 22, 23 est rapporté au dos du mât sur sa dernière nervure structurelle transversale 1 A1, les bielles venant s'engager entre lesdits côtés de la chape. Plus particulièrement, le côté latéral 22 de la chape, correspondant à une plaque rigide, a une dimension sensiblement analogue à la face transversale arrière 1 G de ladite nervure du mât, de sorte que la ferrure prolonge avantageusement te mât en restant -inscrit-dans sa face transversale.

Bien entendu, la ferrure 17 est rendue solidaire de la dernière nervure structurelle 1 A1 dudit mât par tout moyen approprié connu en soi.

De façon analogue, la ferrure supérieure 18 est également une pièce structurelle monobloc correspondant à une chape 24 à section transversale en U, dont la base 25 est rapportée fixement à la structure de l'intrados 2A de l'aile par tout moyen approprié.

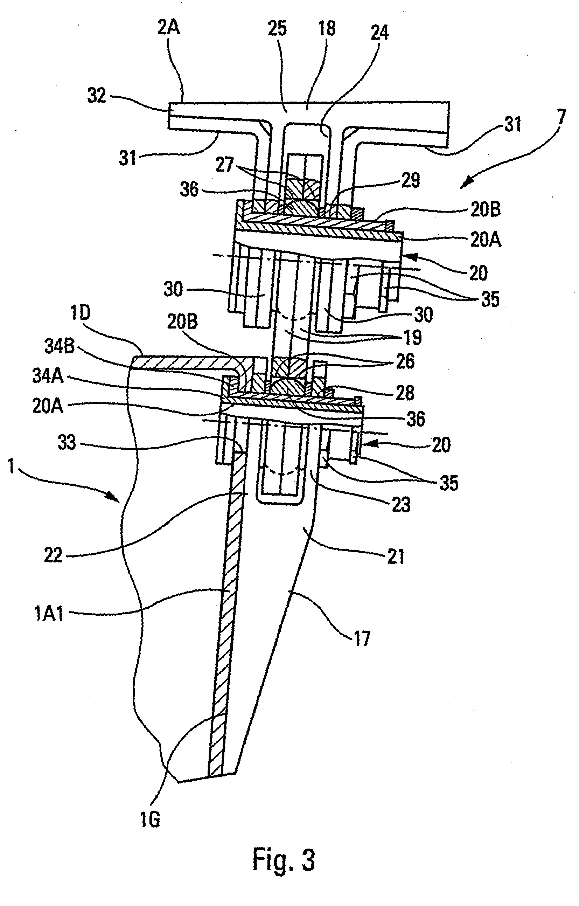

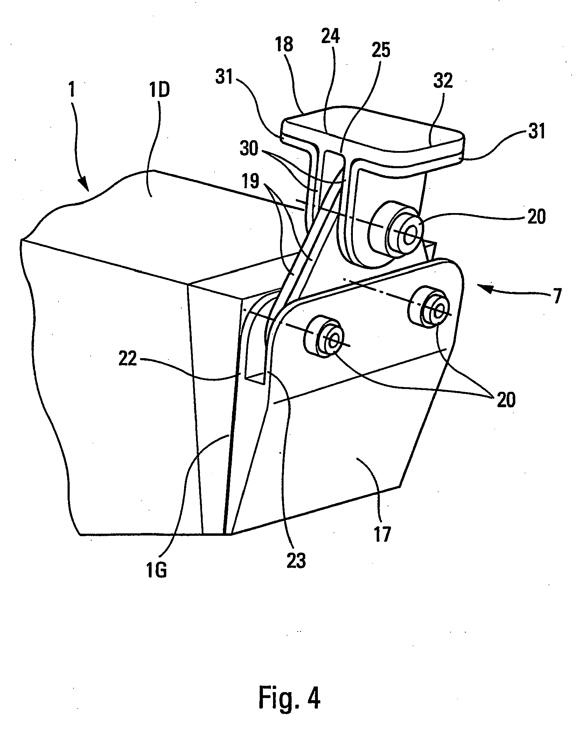

Comme le montrent les figures 3 et 4, les deux bielles identiques de liaison 19 sont quant à elles de forme triangulaire, isocèle ou équilatérale, deux axes d'articulation 20 reliant dans cet exemple les bielles superposées à la ferrure inférieure 17 et un axe d'articulation 20 reliant celles-ci à la ferrure supérieure 18. Ainsi, dans la base des bielles superposées 19 sont prévus deux jeux parallèles de deux trous débouchants alignés 26, tandis que dans le sommet opposé des bielles triangulaires est ménagé un seul jeu de deux trous débouchants alignés 27, parallèles aux trous 26. Les bielles s'engagent dans les chapes 21 et 24 en U des ferrures inférieure 17 et supérieure 18 et sont réunies à celles-ci respectivement par les deux axes d'articulation 20 traversant les trous débouchants 26 ménagés dans les bielles et des trous en correspondance 28 prévus dans les côtés latéraux 22, 23 de la chape inférieure 21, et 33 prévus dans la dernière nervure 1 A1, et par un axe d'articulation 20 traversant les trous débouchants 27 et des trous en correspondance 29 prévus dans les côtés latéraux 30 de la chape supérieure 24.

On remarque, par ailleurs, sur la figure 3 que les axes d'articulation 20 sont doubles, c'est-à-dire qu'ils sont définis chacun par deux axes tubulaires concentriques respectivement interne 20A et externe 20B, agencés l'un dans l'autre à des fins de sécurité notamment, comme l'agencement des deux bielles superposées 19. De même, deux équerres de renfort 31 sont prévues respectivement de part et d'autre de la ferrure supérieure 18 en étant montées sur l'axe d'articulation correspondant 20 des bielles à la chape en U et rapportées contre des parties externes 32 prolongeant la base 25 de ladite chape.

De plus, on voit également que les axes 20 sont immobilisés axialement en position. Pour cela, ils se terminent, à l'une de leurs extrémités, par des épaulements annulaires externes 34A et 34B s'appliquant l'un contre l'autre d'une part et contre la face interne de la nervure transversale 1 A1 du mât d'autre part, et des écrous freinés 35 sont prévus à leur autre extrémité pour immobiliser ainsi en translation d'une part, les axes interne 20A et externe 20B l'un par rapport à l'autre et d'autre part, l'axe externe 20B par rapport à la ferrure inférieure 17. Par un tel montage, les axes 20 participent à la fixation de la ferrure inférieure au mât.

En outre, pour autoriser un certain degré de liberté aux deux ferrures respectivement inférieure et supérieure l'une par rapport à l'autre, des articulations à rotule 36 sont montées entre les axes externes 20B et les bielles superposées 19 par l'intermédiaire des trous respectifs 26, 27.

L'intérêt de l'invention est particulièrement explicite en regard de la figure 5.

Sur le côté gauche de celle-ci, on a représenté schématiquement l'attache arrière 7' du système de fixation actuel reliant le longeron supérieur arrière 1A' du mât 1' à l'intrados 2A' de l'aile. La ferrure inférieure 17' de l'attache arrière est alors fixée à la face supérieure 1 D' du longeron du mât.

En revanche, selon l'invention représentée sur la partie droite de la figure 5, la ferrure inférieure 17 du système est rapportée sur la face transversale arrière ou dos 1 G de la dernière nervure 1A1 du mât, en dessous du niveau de la face supérieure 1 D du longeron, ce qui permet, pour un même entraxe entre les axes d'articulation 20 (et les mêmes bielles), de rapprocher le mât 1 de l'aile 2 d'une distance D et d'augmenter ainsi la distance disponible entre le mât et le sol, en conséquence de quoi un moteur plus puissant ayant une dimension diamétrale plus grande peut être monté sous l'aile, à partir d'un système de fixation quasi-identique 4.

Sur la figure 1, on a également représenté par un trait mixte TM l'emplacement d'un mât actuel 1' avec le système de fixation existant. On voit donc que l'agencement de l'attache arrière 7 en bout du mât 1 permet de rapprocher celui-ci de la voilure et de gagner la distance D.

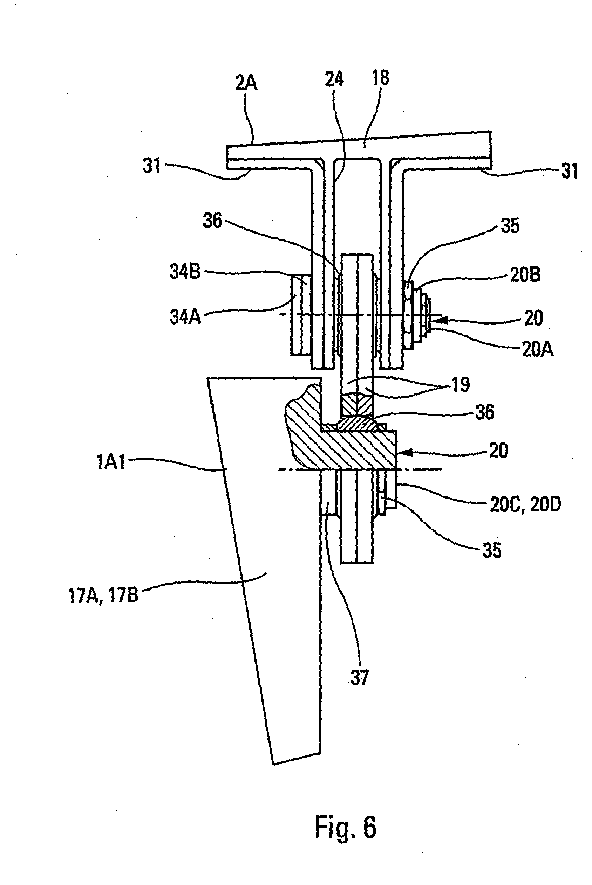

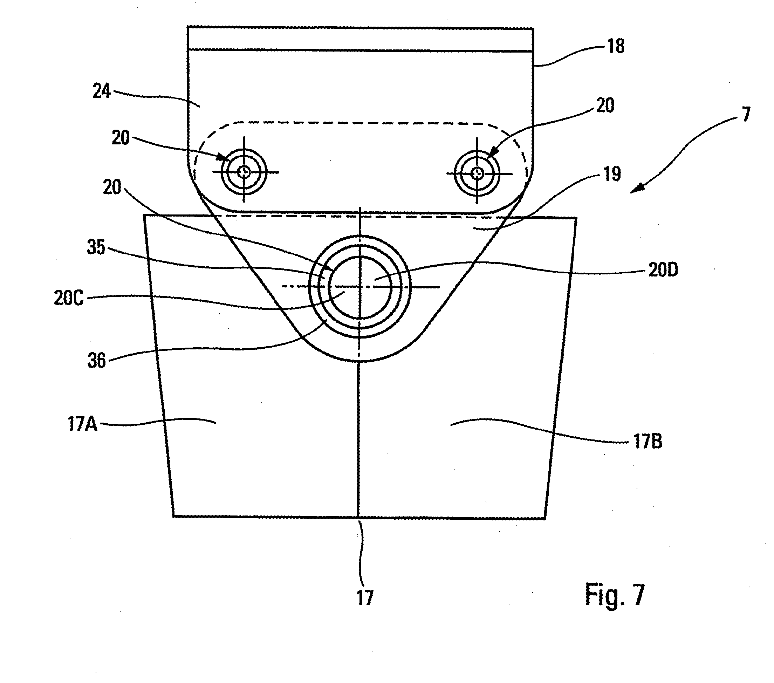

Dans la variante de réalisation de l'attache arrière 7 montrée sur les figures 6 et 7, la ferrure inférieure 17 se compose de deux pièces identiques en forme de plaque 17A, 17B, définissant des demi-ferrures à sécurité intégrée (fail-safe) qui sont disposées côte à côte. Ces demi-ferrures 17A, 17B sont, dans cette variante, intégrées au mât et constituent la dernière nervure transversale de celui-ci.

De ces deux demi-ferrures font saillie perpendiculairement et vers l'arrière sur la figure 3, des demi-axes longitudinaux à section transversale demi-circulaire 20C, 20D qui, lorsque les deux demi-ferrures sont montées, définissent un axe plein à section circulaire 20 de fonction identique aux axes d'articulation précédents. L'axe 20 peut faire partie des demi-ferrures, comme c'est le cas dans la variante illustrée, ou être rapporté aux demi-ferrures 17A, 17B d'une manière analogue au montage des axes sur la figure 3. Ainsi, dans cette variante, les deux bielles superposées triangulaires 19 sont associées à la ferrure inférieure 17 par ledit axe 20 des demi-ferrures (au lieu des deux axes prévus dans la réalisation précédente) et à la ferrure supérieure par deux axes 20 (au lieu d'un seul). L'attache arrière 7 est ainsi reliée à l'intrados de la voilure par deux axes et au mât portant le moteur par un axe.

Par ailleurs, on voit notamment sur la figure 6, qu'une bague 37 est disposée autour des deux demi-axes 20C, 20D entre tes demi-ferrures 17A, 17B et les bielles 19, ce qui permet l'appui et le réglage en profondeur, selon l'axe 20, de la rotule 36 également montée autour des demi-axes. Un écrou de serrage 35, prévu en bout dudit axe 20, assure le blocage de l'ensemble.

Bien évidemment, la ferrure supérieure 18 de l'attache 7 et, dans cette variante, les deux axes s'y rattachant avec les rotules et les écrous sont de conception identique à la réalisation précédente.

Une telle variante de réalisation de l'attache arrière, illustrée sur les figures 6 et 7, procure les mêmes avantages que précédemment, en particulier le rapprochement du mât 1 de l'aile 2 grâce à l'agencement de la ferrure inférieure 17 de l'attache arrière en bout du mât.

## Revendications

1. Ensemble constitué d'un mât de moteur d'aéronef et d'un système de fixation dudit mât à l'aile correspondante de la voilure dudit aéronef, du type comportant une attache avant (6), une attache arrière (7) et une attache intermédiaire (8) permettant de relier ledit mât (1) à ladite aile (2) et agencées respectivement sensiblement selon des axes pouvant correspondre aux axes de tangage, de roulis et de lacet dudit aéronef, ladite attache arrière (7) étant unique et comportant une ferrure inférieure (17) solidaire dudit mât, une ferrure supérieure (18) apte à être solidarisée avec ladite aile et au moins une bielle (19) reliant, par l'intermédiaire d'axes d'articulation parallèles (20), lesdites ferrures inférieure et supérieure,
**caractérisé en ce que** ladite ferrure inférieure (17) de ladite attache arrière (7) a une dimension sensiblement analogue à la face transversale arrière (1 G) dudit mât et est agencée fixement sur cette face transversale arrière (1G), dans le prolongement dudit mât, ladite ferrure inférieure (17) venant au plus sensiblement à fleur de la face supérieure dudit mât.

2. Ensemble selon la revendication 1,
**caractérisé en ce que** ladite ferrure inférieure (17) de l'attache arrière est une pièce monobloc fixée à ladite face transversale arrière (1G) du mât et ayant une forme de chape (21) destinée à recevoir ladite bielle (19) par l'intermédiaire dudit axe d'articulation (20) parallèle à l'axe de roulis dudit aéronef.

3. Ensemble selon la revendication 1,
**caractérisé en ce que** ladite ferrure inférieure (17) se compose de deux pièces sensiblement identiques (17A, 17B), disposées côte à côte et portant ledit axe d'articulation (20) parallèle audit axe de roulis et autour duquel est montée ladite bielle (19).

4. Ensemble selon l'une des revendications 2 ou 3,
**caractérisé en ce que** ladite ferrure inférieure (17) définit ladite face arrière dudit mât (1).

5. Ensemble selon l'une quelconque des revendications 1 à 4,
**caractérisé en ce que** ladite ferrure supérieure (18) de l'attache arrière est une pièce monobloc en forme de U (24) dont la base (25) est solidaire de l'intrados (2A) de ladite aile.

6. Ensemble selon l'une quelconque des revendications 1 à 5,
**caractérisé en ce que** ladite attache arrière (7) comporte deux bielles (19) identiques et superposées l'une contre l'autre reliant lesdites ferrures inférieure (17) et supérieure (18) par l'intermédiaire desdits axes d'articulation (20).

7. Ensemble selon l'une quelconque des revendications 1 à 6,
**caractérisé en ce que** ladite bielle (19) a une forme de plaque triangulaire au moins isocèle, dont la base est articulée à la ferrure inférieure (17) autour de deux axes parallèles (20), tandis que le sommet opposé à ladite base est articulé à la ferrure supérieure (18) autour d'un unique axe (20), parallèle aux deux autres.

8. Ensemble selon l'une quelconque des revendications 1 à 6,
**caractérisé en ce que** ladite bielle (19) a une forme de plaque triangulaire au moins isocèle, dont la base est articulée à la ferrure supérieure (18) autour de deux axes parallèles (20), tandis que le sommet opposé à ladite base est articulé à la ferrure inférieure (17) autour d'un unique axe (20), parallèle aux deux autres.

9. Ensemble selon l'une quelconque des revendications 1 à 8,
**caractérisé en ce que** chaque axe d'articulation (20) de ladite attache arrière (7) est double et comprend un axe externe creux (20B) à l'intérieur duquel est disposé concentriquement un axe interne (20A), les deux axes (20A, 20B) de chaque articulation reliant la bielle (19) à la ferrure correspondante (17, 18).

10. Ensemble selon la revendication 3,
**caractérisé en ce que** ledit axe d'articulation (20) de la ferrure inférieure (17) est constitué de deux demi-axes longitudinaux (20C, 20D) faisant saillie respectivement desdites pièces et qui, lorsque lesdites pièces sont disposées côte à côte, forment ledit axe d'articulation (20).

11. Ensemble selon l'une quelconque des revendications 1 à 10,
**caractérisé en ce que**, de part et d'autre de ladite ferrure supérieure (18), sont prévues des équerres de renfort (31) superposées à ladite ferrure.

## Claims

1. An assembly comprising an airplane engine strut and a system for fixing said strut to the corresponding wing of the wing structure of said airplane, of the type comprising a front attachment (6), a rear attachment (7) and an intermediate attachment (8) which are able to connect said strut (1) to said wing (2) and are arranged substantially along axes able to correspond with the pitch, roll and yaw axes, respectively, of said airplane, said rear attachment (7) being a single attachment and comprising a lower fitting (17) secured to said strut, an upper fitting (18) able to be secured to said wing and at least one link (19) which, by way of parallel joint pins (20), connects said lower and upper fittings, **characterized in that** said lower fitting (17) of said rear attachment (7) has a size substantially analogous to said rear transverse face (1G) of said strut and is arranged fixedly on this rear transverse face (1G), in the continuation of said strut, said lower fitting (17) coming, at most, substantially flush with the upper face of said strut.

2. The assembly as claimed in claim 1, **characterized in that** said lower fitting (17) of the rear attachment is a one-piece component fixed to said rear transverse face (1G) of the strut and having the shape of a clevis (21) intended to receive said link (19) by way of said joint pin (20) parallel to the roll axis of said airplane.

3. The assembly as claimed in claim 1, **characterized in that** said lower fitting (17) is composed of two substantially identical components (17A, 17B) arranged side by side and bearing said joint pin (20) parallel to said roll axis and about which said link (19) is mounted.

4. The assembly as claimed in either of claims 2 and 3, **characterized in that** said lower fitting (17) defines said rear face of said strut (1).

5. The assembly as claimed in any one of claims 1 to 4, **characterized in that** said upper fitting (18) of the rear attachment is a U-shaped one-piece component (24) whose base (25) is secured to the underside (2A) of said wing.

6. The assembly as claimed in any one of claims 1 to 5, **characterized in that** said rear attachment (7) comprises two identical links (19) which are superposed one against the other and connect said lower (17) and upper (18) fittings by way of said joint pins (20).

7. The assembly as claimed in any one of claims 1 to 6, **characterized in that** said link (19) has the shape of an at least isosceles triangular plate whose base is articulated on the lower fitting (17) about two parallel pins (20), whereas the vertex opposite said base is articulated on the upper fitting (18) about a single pin (20), parallel to the other two.

8. The assembly as claimed in any one of claims 1 to 6, **characterized in that** said link (19) has the shape of an at least isosceles triangular plate whose base is articulated on the upper fitting (18) about two parallel pins (20), whereas the vertex opposite said base is articulated on the lower fitting (17) about a single pin (20), parallel to the other two.

9. The assembly as claimed in any one of claims 1 to 8, **characterized in that** each joint pin (20) of said rear attachment (7) is double and comprises a hollow outer pin (20B) inside which is concentrically arranged an inner pin (20A), the two pins (20A, 20B) of each joint connecting the link (19) to the corresponding fitting (17, 18).

10. The assembly as claimed in claim 3, **characterized in that** said joint pin (20) of the lower fitting (17) consists of two longitudinal half-pins (20C, 20D) which respectively project from said components and which, when said components are arranged side by side, form said joint pin (20).

11. The assembly as claimed in any one of claims 1 to 10, **characterized in that**, on either side of said upper fitting (18), there are provided reinforcing brackets (31) superposed on said fitting.

## Patentansprüche

1. Einheit aus einem Pylon für ein Flugzeugtriebwerk und einem System zum Befestigen des Pylons an der entsprechenden Tragfläche des Flugzeugflügels, das eine vordere Aufhängung (6), eine hintere Aufhängung (7) und eine mittlere Aufhängung (8) zum Verbinden des Pylons (1) an der Tragfläche (2) umfasst, die jeweils im wesentlichen an Achsen ausgerichtet sind, die insbesondere der Nick-, Roll- und Gierachse des Flugzeugs entsprechen, wobei die hintere Aufhängung (7) einzeln ist und einen unteren Beschlag (17), der mit dem Pylon verbunden ist, einen oberen Beschlag (18), der ausgelegt ist, um mit der besagten Tragfläche verbunden zu werden, und wenigstens ein Element (19) umfasst, das über parallele Gelenkachsen (20) den unteren und den oberen Beschlag miteinander verbindet,
**dadurch gekennzeichnet, dass** der untere Beschlag (17) der hinteren Aufhängung (7) im wesentlichen die gleiche Größe wie die hintere transversale Fläche (1 G) des Pylons hat und in Verlängerung des Pylons ausgerichtet an der hinteren transversalen Fläche (1 G) befestigt ist, wobei der untere Beschlag (17) höchstens im wesentlichen bis zur Höhe der Oberfläche des Pylons ragt.

2. Einheit nach Anspruch 1,
**dadurch gekennzeichnet, dass** der untere Beschlag (17) der hinteren Aufhängung ein einstückiges Teil ist, das an der transversalen hinteren Fläche (1 G) des Pylons befestigt ist und die Form einer Abdeckung (21) aufweist, die dazu geeignet ist, das Element (19) mittels der zur Rollachse des Flugzeugs parallelen Gelenkachse (20) aufzunehmen.

3. Einheit nach Anspruch 1,
**dadurch gekennzeichnet, dass** der untere Beschlag (17) sich aus zwei im wesentlichen identischen Teilen (17A, 17B) zusammensetzt, die Seite an Seite angeordnet sind und die die zu der Rollachse parallele Gelenkachse (20), um welche das Element (19) herum montiert ist, tragen.

4. Einheit nach Anspruch 2 oder 3,
**dadurch gekennzeichnet, dass** der untere Beschlag (17) die Rückseite des Pylons (1) definiert.

5. Einheit nach einem der Ansprüche 1 bis 4,
**dadurch gekennzeichnet, dass** der obere Beschlag (18) der hinteren Aufhängung ein einstückiges Teil in Form eines U (24) ist, dessen Basis (25) mit der Leibung (2A) der Tragfläche verbunden ist.

6. Einheit nach einem der Ansprüche 1 bis 5,
**dadurch gekennzeichnet, dass** die hintere Aufhängung (7) zwei identische und einander überlagerte Elemente (19) umfasst, die den unteren Beschlag (17) und den oberen Beschlag (18) über die Gelenkachsen (20) verbinden.

7. Einheit nach einem der Ansprüche 1 bis 6,
**dadurch gekennzeichnet, dass** das Element (19) die Form einer wenigstens gleichschenkligen dreieckigen Platte aufweist, deren Basis um zwei parallele Achsen (20) herum gelenkig mit dem unteren Beschlag (17) verbunden ist, während die der Basis gegenüberliegende Spitze um eine einzelne, zu den beiden anderen parallele Achse (20) herum gelenkig mit dem oberen Beschlag (18) verbunden ist.

8. Einheit nach einem der Ansprüche 1 bis 6,
**dadurch gekennzeichnet, dass** das Element (19) die Form einer wenigstens gleichschenkligen dreieckigen Platte aufweist, deren Basis um zwei parallele Achsen (20) herum gelenkig mit dem oberen Beschlag (18) verbunden ist, während die der Basis gegenüberliegende Spitze um eine einzelne, zu den beiden anderen parallele Achse (20) herum gelenkig mit dem unteren Beschlag (17) verbunden ist.

9. Einheit nach einem der Ansprüche 1 bis 8,
**dadurch gekennzeichnet, dass** jede Gelenkachse (20) der hinteren Aufhängung (7) doppelt ausgelegt ist und eine äußere Hohlachse (20B) umfasst, in deren Innerem eine innere Achse (20A) konzentrisch angeordnet ist, wobei die beiden Achsen (20A, 20B) jedes Gelenks das Element (19) mit dem entsprechenden Beschlag (17, 18) verbinden.

10. Einheit nach Anspruch 3,
**dadurch gekennzeichnet, dass** die Gelenkachse (20) des unteren Beschlages (17) aus zwei längs verlaufenden Halbachsen (20C, 20D) besteht, die jeweils über die Teile vorspringen und die die Gelenkachse (20) bilden, wenn die Teile Seite an Seite angeordnet sind.

11. Einheit nach einem der Ansprüche 1 bis 10,
**dadurch gekennzeichnet, dass** auf beiden Seiten des oberen Beschlages (18) Verstärkungswinkel (31) vorgesehen sind, die dem Beschlag überlagert sind.
